# EUROPEAN PATENT SPECIFICATION

(11) **EP 3 286 445 B1**
(45) Date of publication and mention of the grant of the patent: **20.02.2019**
(21) Application number: 15717488.9
(22) Date of filing: 20.04.2015
(51) Int. Cl.: F16B 21/16

(54) **LEVER SHAFT ASSEMBLY**
HEBEL-WELLE-BAUGRUPPE
ENSEMBLE ARBRE/LEVIER

(43) Date of publication of application: 28.02.2018
(73) Proprietor: Kongsberg Automotive As, 3601 Kongsberg (NO)
(72) Inventor: HANSSON, Bill, S-56534 Mullsjö (SE); SVENSSON, Sören, S-56594 Sandhem (SE)
(74) Representative: Uexküll & Stolberg
(86) International application number: PCT/EP2015/058515
(87) International publication number: WO 2016/169580

(56) References cited:
- WO-A1-2009/030558
- DE-B3-102011 050 747
- DE-U1- 29 804 447
- US-A- 52 455
- US-A- 3 455 586
- US-A- 3 730 569
- US-A1- 2008 240 849

## Description

The present invention relates to a lever shaft assembly comprising a shaft and a lever having lever portion which in the assembled state extends perpendicularly from the shaft and an annular opening portion including a receiving opening, the receiving opening and the shaft being adapted such that the shaft can be inserted by moving it along its axial direction into the receiving opening, the outer wall of the shaft having an engagement recess and an inner wall of the receiving opening including a projecting wall projecting into the annular receiving opening, which recess and projecting wall are arranged to cooperate by positive engagement to lock said lever and shaft against relative pivotal movements about the longitudinal axis of the shaft.

A typical field of application of such lever shaft assemblies is a shift shaft or a select shaft of a transmission of a vehicle. If the shaft is for example a shift shaft of a transmission, the end of the shaft is connected to a shift lever which extends perpendicularly to the longitudinal axis of the shift shaft. To the end of the lever remote from the shift shaft a cable or rod is connected to transmit shift commands by exerting force on the end of the lever to create a torque to pivot the lever in forward or rearward direction to rotate the shift shaft about its longitudinal axis to execute a shift command.

In typical lever shaft assemblies for these applications the lever is connected to the shaft by welding. However, such lever shaft assemblies cannot easily be assembled in environments with limited space, for example in a vehicle in an area close to the housing of the gearbox.

WO 2009/030558 A1 discloses a lever shaft assembly comprising the features of the preamble of claim 1. The lever has an annular receiving opening portion and a lever portion extending therefrom. The receiving opening portion is generally circular, but on two opposite sides of the annular receiving opening projecting walls are extending into the circular opening area, the projecting edge of each of the projecting walls being a secant in the originally circular receiving opening. The projecting walls are arranged symmetrically on two opposite sides, wherein their projecting edges extend parallel to each other. The originally cylindrical body of the shaft is provided on one of its ends with two opposite recesses which are arranged symmetrically on two opposite sides of the shaft, wherein the missing part of the original cylinder of the shaft of each recess corresponds to a cylinder segment. The projecting walls of the receiving opening and the recesses at one end of the shaft are complementary such that the shaft end with the recesses may be inserted into the receiving opening with the recess aligned with respect to the projecting walls. The dimensions of the projecting walls and the recesses are arranged such that the projecting walls of the receiving opening and the recesses of the end portion of the shaft provide a clearance-free, positively locking engagement against rotational movement of the shaft relative to each other. On the other hand there is no locking engagement of the lever in axial direction of the shaft. For this reason a separate fastening element is utilized which acts on the lever in one axial direction of the shaft such that the lever is locked between the fastening element and the bottom of the recesses. The projecting walls and the recesses of this lever shaft assembly have to be machined such that they are dimensioned precisely adapted to each other to ensure on the one hand that the lever can be pushed over the shaft end with the recesses and can be moved in axial direction with the projecting walls sliding over the opposite surfaces of the recesses, while on the other hand, they have to fit tightly to each other such that any backlash or play for rotational movements of the lever with respect to the shaft is avoided.

It is an object of the present invention to provide a lever shaft assembly that can be assembled in areas with little space available, and that provides for a positive locking engagement of shaft and lever without high requirements on the relative dimensions of the engaging projecting walls and recesses.

This object is achieved by lever shaft assembly comprising the features of claim 1. Preferred embodiments are set out in the dependent claims.

According to the present invention the recess in the outer surface of the shaft as formed by a groove circumferentially extending over part of the circumference of the shaft. The groove has dimensions complementary to the projecting wall, i.e. the dimensions of projecting wall and groove in axial direction of the shaft correspond to each other, and the shape of the front edge of the projecting wall corresponds to the shape of the bottom wall of the groove such that the projecting wall can be inserted and advanced into the groove until a locking abutment between the projecting wall surfaces and the inner wall surfaces of the groove is reached. In this manner a positive mechanical engagement between the projecting wall and the groove, both in axial direction of the shaft as well as against rotations of the shaft and the lever relative to each other about the longitudinal axis of the shaft, is established. In other words, the projecting wall and the groove can be brought into engagement by advancing the shaft perpendicular to its longitudinal axis direction relative to the receiving opening portion such that the projecting wall is received in the groove to lock the lever and the shaft against rotational and axial movements relative to each other. Furthermore, a releasable fastener is provided for securing the shaft in the receiving opening against movements of the shaft perpendicular to its longitudinal axis away from the projecting wall to thereby keep the shaft with the groove and the projecting wall locked in the engaged position.

In this manner a simple and reliable form-locking connection between the shaft and the lever can be achieved. In addition, lever and shaft can be assembled in environments where very a little space is available around the end portion of the shaft, which end portion is to be brought into engagement with the annular opening portion of the lever.

In a preferred embodiment the front edge of the projecting wall and the bottom wall of the groove each extend in a plane perpendicular to a radial direction with respect to the longitudinal axis of the shaft. In other words, in a cross-sectional view perpendicular to the longitudinal axis of the shaft in the region of the projecting wall and the groove the front edge line of the projecting wall extends along a secant in the annular receiving portion of the lever. Likewise the bottom line of the groove extends in this cross-sectional view along a secant of the annular receiving portion. If the planar bottom wall is in contact with the planar front edge of the projecting wall in the engaged position the two planar surfaces in abutting contact provide a form-locking engagement against rotational movements about the longitudinal axis of the shaft.

The described planar contact surfaces formed by the planar bottom wall of the groove and the planar front edge of the projecting wall are preferred because they can be formed by machining the shaft and the lever in a simple manner. However, in principle the contact surfaces can also be composed of several partial planes disposed at an angle to each other, i.e. the contact surfaces form in the described cross-sectional view polygons. In principle all shapes of the contact surfaces are possible, except cylindrical contact surfaces centered on the longitudinal axis of the shaft which would allow rotational movements of the shaft with respect to the lever.

In a preferred embodiment the projecting wall is tapering towards its front edge, i.e. the thickness of the projecting wall is getting smaller towards the front edge. In this case the groove is shaped in a complementary manner with sidewalls tapering towards the groove bottom such that the width of the groove is getting smaller towards the groove bottom. This arrangement has the effect that any misalignment between the projecting wall and the groove in the direction of the longitudinal axis of the shaft is compensated when the tapering projecting wall is advanced into the groove with tapering sidewalls.

In a preferred embodiment the releasable fastener is provided by a stop screw which is received in a sleeve in the annular opening portion of the lever, which sleeve has a threaded bore which opens out into the receiving opening at a position opposite to the projecting wall. By fastening the stop screw its tip portion is moved in radial direction further into the receiving opening and onto a surface portion of the shaft opposite to the groove so that by fastening the stop screw the groove and the projecting wall are pressed into engagement. In a preferred embodiment of such a releasable fastener the shaft surface is provided with a dimple in a position opposite to the center of the groove, the dimple being arranged for receiving the tip portion of the stop screw when the stop screw is moved against the shaft surface in the region of the dimple. Such dimple in the outer surface of the shaft cooperating with a tip portion of the stop screw has a centering effect when the stop screw is tightened. In addition, the tip portion of the stop screw received in the dimple also has a locking effect for the engagement of shaft and lever.

In a further aspect the invention provides a method for assembling a lever shaft assembly as defined above, comprising:
placing the lever at its intended mounting location in a vehicle structure;
placing the shaft below the annular opening portion of the lever;
moving the shaft along its longitudinal axis upwards relative to the receiving opening until the groove of the shaft and the projecting wall of the annular opening portion are located at the same level with respect to the longitudinal direction of the shaft;
aligning the groove and the projecting wall such that the centre of the groove is located opposite to the centre of the projecting end wall;
moving shaft and lever in a direction perpendicular to the direction of the longitudinal axis of the shaft towards each other so that the projecting wall is received in the groove; and
securing shaft and lever in positive engagement with each other by applying the releasable fastener, thereby urging the shaft towards the projecting wall to lock them in positive engagement.

In the following the invention is described with reference to a preferred embodiment shown in the drawings in which:
Fig. 1 shows a perspective view of the lever shaft assembly before it is assembled in the intended location in a vehicle structure;
Fig. 2 shows a perspective view of the lever of this embodiment;
Fig. 3 shows a top plan view of the lever of this embodiment;
Fig. 4 shows a top plan view of the lever as in Fig. 4 but with the shaft received in the receiving opening;
Fig. 5 shows a perspective view of the shaft of this embodiment;
Fig. 6 shows a perspective view of the shaft which is rotated by about 270° about its longitudinal axis compared to Fig. 5; and
Fig. 7 shows a cross-sectional view of the shaft at a level at which a groove and an opposite dimple are formed in the surface of the shaft.

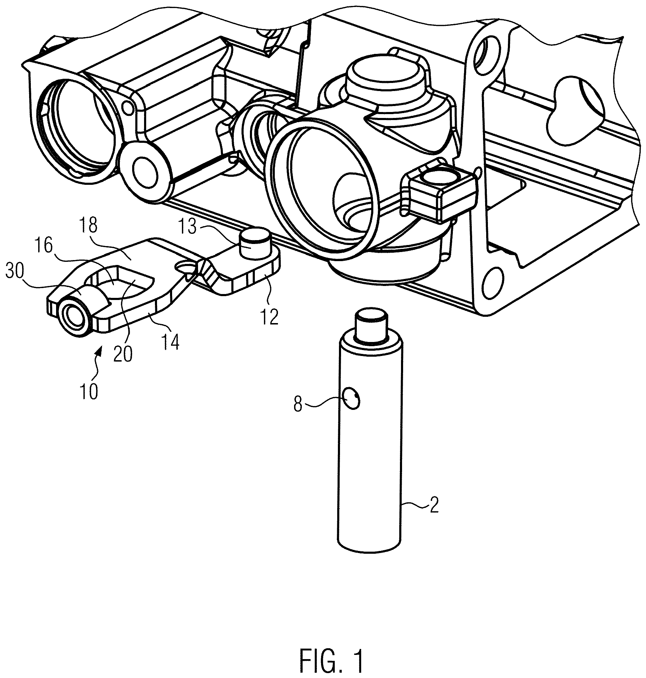

For a first overview reference is made to Fig. 1 which shows a lever shaft assembly before lever and shaft are assembled in the intended location in a vehicle structure. This vehicle structure can be for example the housing of a transmission. In Fig. 1 the lever 10 will be introduced into an open cylindrical housing portion such that a receiving opening 16 of the lever 10 is disposed over an aperture in the lower surface of the cylindrical housing portion. Then a shaft is disposed below the aperture in the cylindrical housing portion. The shaft 2 is oriented with its longitudinal axis in a vertical direction below the aperture, and then lifted up so that the upper end portion is introduced and advanced through the receiving opening 16 of the lever 10. In such a situation with limited space in the environment around the area where the lever 10 and the shaft 2 have to be connected, conventional techniques such as welding or applying further securing elements in the area of the connection are very difficult carry out since the actual area of the connection of the lever to the shaft is difficult to access due to the surrounding housing walls.

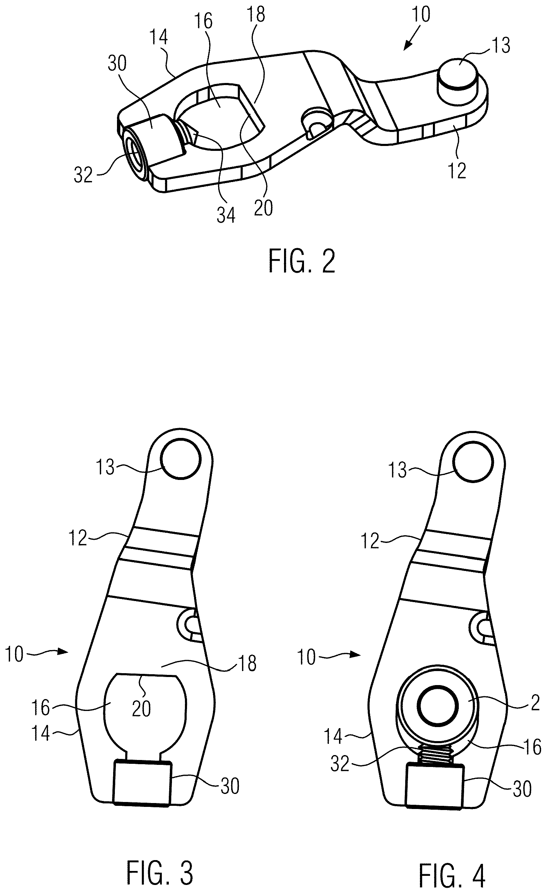

The lever of this embodiment will now be described with reference to Figs. 2 to 4. The lever 10 has an annular receiving portion 14 in which a receiving opening 16 is formed, and a lever portion 12. The lever portion 12 has a stud 13 at its outer end which is provided for connection to an end fitting of a cable for actuating the lever.

The receiving opening 16 is generally circular, but slightly oval-shaped. At one side a projecting wall 18 projects into the area of the originally oval-shaped receiving opening 16. Opposite to the projecting wall 18 a sleeve 30 is disposed in the annular receiving portion 14. The sleeve 30 has a threaded bore opening out into the receiving opening 16 and being oriented such that the longitudinal axis of the threaded bore of the sleeve 30 is directed towards the front edge 20 of the projecting wall 18. As can be seen in Figs. 2 and 4 a stop screw 32 is screwed into the threaded bore of the sleeve 30. The stop screw 32 has a conical tip portion 34. By tightening the stop screw 32 the tip portion 34 of the stop screw is moved further into the receiving opening 16 towards the front edge 20 of the projecting wall 18.

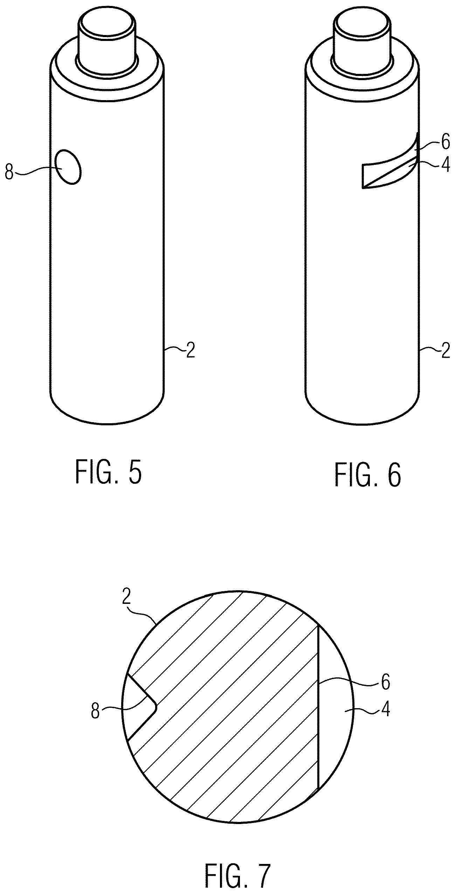

The shaft 2 of this embodiment will now be described with reference to Figs. 5 to 7. The shaft 2 has a cylindrical main body. The outer surface of the shaft 2 is in one end portion of the shaft 2 provided with a dimple 8. Opposite to the dimple 8 a groove 4 extending over part of the circumference of the shaft is formed. As can be seen in Fig. 7 the centre of the dimple 8 is diametrically opposite to the centre of the groove 4. The groove 4 has a planar bottom wall 6, wherein the plane of the planar bottom wall 6 is disposed such that in a cross-section perpendicular to the axial direction of the shaft, the cross-sectional line through the bottom wall 6 in the cross- is a secant of the circle describing the outer surface of the shaft in cross-section. As pointed out above such a planar bottom wall 6 of the groove 4 is preferred from a manufacturing point of view. However, in principle the line describing the shape of the bottom wall 6 of the groove in the cross-section has in Fig. 7 could also be composed of a several straight line portions disposed at an angle relative to each other, for example as a polygon. In any case the shape and disposition of the bottom wall 6 of the groove 4 has to be adapted to the shape of the front edge 20 of the projecting wall 18 such that they can come into form-locking positive engagement.

The dimple 8 of the shaft 2 is complementary to the conical tip portion 34 of the stop screw 32.

The assembly of the lever shaft assembly of this embodiment will know be described with reference to Fig. 1. The lever 10 is introduced in an open cylindrical housing portion which is its intended mounting location, wherein the lever 10 is positioned there such that the receiving opening 16 is disposed above an aperture in the lower portion of the wall of the cylindrical housing portion. Then the vertically oriented shaft 2 is moved upwards until the groove 4 in the shaft is located at the same axial level as the projecting wall 18 of the lever. In this case also the sleeve 30 for receiving the stop screw is located at the same level in axial direction of the shaft 2 as the dimple 8. Then shaft 2 is moved in a direction perpendicular to its longitudinal axis towards the projecting wall 18 of the lever 10 until the projecting wall 18 is received in the groove 4 of the shaft 2. Then the releasable fastener is applied which in this embodiment is a stop screw 32 received in the threaded bore of the sleeve 30. By tightening the stop screw 32 its tip portion 34 is advanced towards the dimple 8 in the shaft 2 and received therein. By further tightening the stop screw 32 shaft 2 is urged towards the projecting wall 18 such that groove 4 and projecting wall 18 are pressed towards each other to a positively engaged state in which the surfaces of the projecting wall 18 are in abutment with the inner surfaces of the groove 4 so that a form-locking positive engagement between lever and shaft both in axial direction and in rotational direction about the longitudinal axis of the shaft is obtained.

## Claims

1. A lever shaft assembly comprising a shaft (2) and a lever (10) having lever portion (12) which in the assembled state extends perpendicularly from the shaft and an annular opening portion (14) including a receiving opening (16), the receiving opening (16) and the shaft (2) being adapted such that the shaft can be inserted by moving it along its axial direction into the receiving opening (16), the outer wall of the shaft having an engagement recess and an inner wall of the receiving opening including a projecting wall (18) projecting into the annular receiving opening, which recess and projecting wall are arranged to cooperate by positive engagement to lock said lever and shaft against relative pivotal movements about the longitudinal axis of the shaft,
**characterized in that** the recess of the shaft is formed by a groove (4) circumferentially extending over a part of the circumference of the shaft (2) and having dimensions complementary to the projecting wall (18) such that the projecting wall and the groove can be brought into engagement by moving the shaft (2) perpendicular to its axial direction relative to the receiving opening portion (16) to let the projecting wall be received in the groove (4) to lock the lever and the shaft against rotational and axial movements relative to each other by positive mutual engagement, and that a releasable fastener (32) is provided for securing the shaft (2) in the receiving opening against movements of the shaft perpendicular to its longitudinal axis to keep the shaft with the groove and the projecting wall locked in the engaged position.

2. The lever shaft assembly according to claim 1, **characterized in that** a front edge (20) of the projecting wall (18) and a bottom wall (6) of the groove (4) extend in a plane perpendicular to a radial direction with respect to the longitudinal axis of the shaft (2).

3. The lever shaft assembly according to claim 1 or 2, **characterized in that** the projecting wall (16) is tapering towards its front edge and the side walls of the groove (4) are tapering towards the groove bottom in a complementary manner.

4. The lever shaft assembly according to any of the preceding claims, **characterized in that** as the releasable fastener (32) a stop screw is provided which is received in a sleeve (30) with a threaded bore which opens out into the receiving opening (16) at a position opposite to the projecting wall (16) such that fastening of the stop screw urges a tip portion (34) of the stop screw onto the outer surface of the shaft (2) so that groove (4) and projecting wall (16) are pressed into engagement.

5. The lever shaft assembly according to claim 4, **characterized in that** the shaft surface is provided with a dimple (8) in a position opposite to the centre of the groove (4), the dimple (8) being arranged for receiving the tip (34) of the stop screw.

6. A method for assembling a lever shaft assembly according to any of the preceding claims comprising:
placing the lever (10) at its intended position;
placing the shaft (2) below the annular opening portion (14) of the lever;
moving the shaft (2) along its longitudinal axis upwards relative to the receiving opening until the groove (4) of the shaft and the projecting wall (18) of the annular opening portion (14) are located at same level with respect to the longitudinal direction of the shaft;
aligning the groove (4) and the projecting wall (16) such that the centre of the groove (4) is located opposite to the centre of the projecting wall (18);
moving shaft (2) and lever (10) in a direction perpendicular to the direction of the longitudinal axis of the shaft towards each other so that the projecting wall (18) is received in the groove (4); and
securing shaft (2) and lever (10) in positive engagement with each other by applying the releasable fastener (32), thereby urging the shaft towards the projecting wall to lock them in positive engagement.

## Patentansprüche

1. Hebel-Welle-Baugruppe mit einer Welle (2) und einem Hebel (10), der einen Hebelbereich (12), der im zusammengesetzten Zustand senkrecht von der Welle absteht, und einen ringförmigen Öffnungsbereich (14) mit einer Aufnahmeöffnung (16) hat, wobei die Aufnahmeöffnung (16) und die Welle (2) so ausgestaltet sind, dass die Welle eingeführt werden kann, indem sie entlang ihrer Axialrichtung in die Aufnahmeöffnung (16) bewegt wird, wobei die Außenwand der Welle eine Eingriffsvertiefung und eine Innenwand der Aufnahmeöffnung eine vorstehende Wand (18) hat, die in die ringförmige Aufnahmeöffnung vorsteht, wobei die Vertiefung und die vorstehende Wand dazu gestaltet sind, um zum formschlüssigen Eingriff zusammenzuwirken, um den Hebel und die Welle gegen relative Drehbewegungen um die Längsachse der Welle zu verriegeln,
**dadurch gekennzeichnet, dass** die Vertiefung der Welle durch eine Nut (4) gebildet ist, die in Umfangsrichtung über einen Teil des Umfangs der Welle (2) ausgedehnt ist und zu der vorstehenden Wand (18) komplementäre Dimensionen hat, so dass die vorstehende Wand und die Nut in Eingriff miteinander bringbar sind, indem die Welle (2) senkrecht zu ihrer axialen Richtung relativ zu dem Aufnahmeöffnungsbereich (16) bewegt wird, damit die vorstehende Wand in der Nut (4) aufgenommen wird, um den Hebel und die Welle gegen Dreh- und Axialbewegungen relativ zueinander durch formschlüssigen Eingriff zu verriegeln, und dass ein lösbares Befestigungsmittel (32) bereitgestellt ist, um die Welle (2) in der Aufnahmeöffnung gegen Bewegungen der Welle senkrecht zu seiner Längsachse zu sichern, um die Welle mit der Nut, und der vorstehenden Wand in der Eingriffsstellung zu halten.

2. Hebel-Welle-Baugruppe nach Anspruch 1, **dadurch gekennzeichnet, dass** eine vordere Kante (20) der vorstehenden Wand (18) und eine Bodenwand (6) der Nut (4) in einer Ebene ausgedehnt sind, die senkrecht zu einer radialen Richtung in Bezug auf die Längsachse der Welle (2) liegt.

3. Hebel-Welle-Baugruppe nach Anspruch 1 oder 2, **dadurch gekennzeichnet, dass** die vorstehende Wand (16) sich zu ihrer vorderen Kante hin verjüngt und dass die Seitenwände der Nut (4) sich zum Nutboden hin in komplementärer Weise verjüngen.

4. Hebel-Welle-Baugruppe nach einem der vorhergehende Ansprüche, **dadurch gekennzeichnet, dass** als lösbares Befestigungsmittel (32) eine Anschlagschraube bereitgestellt ist, die in einer Hülse (30) mit einer Gewindebohrung aufgenommen ist, die in die Aufnahmeöffnung (16) an einer Stelle gegenüberliegend der vorstehenden Wand (16) mündet, so dass das Anziehen der Anschlagschraube einen Spitzenbereich (34) der Anschlagschraube auf die äußere Oberfläche der Welle (2) drückt, so dass die Nut (4) und die vorstehende Wand (16) in Eingriff miteinander gedrückt werden.

5. Hebel-Welle-Baugruppe nach Anspruch 4, **dadurch gekennzeichnet, dass** die Wellenoberfläche in einer Position gegenüberliegend der Nut mit einer Vertiefung (8) versehen ist, wobei die Vertiefung (8) so ausgestaltet ist, um die Spitze (34) der Anschlagschraube aufzunehmen.

6. Verfahren zum Zusammensetzen einer Hebel-Welle-Baugruppe nach einem der vorhergehenden Ansprüche, bei dem:
der Hebel (10) an seiner gewünschten Position platziert wird,
die Welle (2) unter den ringförmigen Öffnungsbereich (14) des Hebels platziert wird,
die Welle (2) entlang ihrer Längsachse nach oben relativ zu der Aufnahmeöffnung bewegt wird, bis die Nut (4) der Welle und die vorstehende Wand (18) des ringförmigen Öffnungsbereich in Bezug auf die Längsrichtung der Welle auf demselben Niveau liegen,
die Nut (4) und die vorstehende Wand (16) zueinander ausgerichtet werden, so dass die Mitte der Nut (4) der Mitte der vorstehenden Wand (18) gegenüberliegt,
die Welle (2) und der Hebel (10) in einer Richtung senkrecht zu der Richtung der Längsachse der Welle aufeinander zu bewegt werden, so dass die vorstehende Wand (18) in der Nut (4) aufgenommen wird, und
die Welle (2) und der Hebel (10) in formschlüssigen Eingriff miteinander gesichert werden, indem eine lösbare Befestigungseinrichtung (32) angewendet wird, um dadurch die Welle auf die vorstehende Wand zu zudrücken, um sie in formschlüssigen Eingriff miteinander zu verriegeln.

## Revendications

1. Ensemble d'arbre et de levier comprenant un arbre (2) et un levier (10) présentant une portion de levier (12) qui à l'état assemblé s'étend perpendiculairement depuis l'arbre et une portion d'ouverture annulaire (14) incluant une ouverture de réception (16), l'ouverture de réception (16) et l'arbre (2) étant adaptés de sorte que l'arbre puisse être inséré par son déplacement le long de sa direction axiale dans l'ouverture de réception (16), la paroi extérieure de l'arbre présentant un évidement de mise en prise et une paroi intérieure de l'ouverture de réception incluant une paroi de projection (18) faisant saillie dans l'ouverture de réception annulaire, lesquels évidement et paroi de projection sont agencés pour coopérer par la mise en prise positive pour verrouiller lesdits levier et arbre contre des mouvements pivotants relatifs autour de l'axe longitudinal de l'arbre,
**caractérisé en ce que** l'évidement de l'arbre est formé par une rainure (4) s'étendant sur la circonférence sur une partie de la circonférence de l'arbre (2) et présentant des dimensions complémentaires à la paroi de projection (18) de sorte que la paroi de projection et la rainure puissent être amenées en mise en prise par déplacement de l'arbre (2) perpendiculairement à sa direction axiale par rapport à la portion d'ouverture de réception (16) pour laisser la paroi de projection être reçue dans la rainure (4) afin de verrouiller le levier et l'arbre contre des mouvement rotatifs et axiaux l'un par rapport à l'autre par mise en prise mutuelle positive, et qu'un élément de fixation (32) libérable est prévu pour la fixation de l'arbre (2) dans l'ouverture de réception contre des mouvements de l'arbre perpendiculairement à son axe longitudinal pour maintenir l'arbre avec la rainure et la paroi de projection verrouillées dans la position mise en prise.

2. Ensemble d'arbre et de levier selon la revendication 1, **caractérisé en ce qu'**une arête avant (20) de la paroi de projection (18) et une paroi inférieure (6) de la rainure (4) s'étendent dans un plan perpendiculaire à une direction radiale par rapport à l'axe longitudinal de l'arbre (2).

3. Ensemble d'arbre et de levier selon la revendication 1 ou 2, **caractérisé en ce que** la paroi de projection (16) s'effile vers son arête avant et les parois latérales de la rainure (4) s'effilent vers le fond de rainure de manière complémentaire.

4. Ensemble d'arbre et de levier selon l'une quelconque des revendications précédentes, **caractérisé en ce qu'**en tant qu'élément de fixation libérable (32) une vis d'arrêt est prévue, laquelle est reçue dans un manchon (30) avec un trou fileté qui s'ouvre dans l'ouverture de réception (16) sur une position opposée à la paroi de projection (16) de sorte que la fixation de la vis d'arrêt pousse une portion de bout (34) de la vis d'arrêt sur la surface extérieure de l'arbre (2) de sorte que la rainure (4) et la paroi de projection (16) soient pressées en mise en prise.

5. Ensemble d'arbre et de levier selon la revendication 4, **caractérisé en ce que** la surface d'arbre est dotée d'un bossage (8) dans une position opposée au centre de la rainure (4), le bossage (8) étant agencé pour la réception du bout (34) de la vis d'arrêt.

6. Procédé d'assemblage d'un ensemble d'arbre et de levier selon l'une quelconque des revendications précédentes comprenant :
le placement du levier (10) sur sa position prévue ;
le placement de l'arbre (2) sous la portion d'ouverture annulaire (14) du levier ;
le déplacement de l'arbre (2) le long de son axe longitudinal vers le haut par rapport à l'ouverture de réception jusqu'à ce que la rainure (4) de l'arbre et la paroi de projection (18) de la portion d'ouverture annulaire (14) soient situées au même niveau par rapport à la direction longitudinale de l'arbre ;
l'alignement de la rainure (4) et la paroi de projection (16) de sorte que le centre de la rainure (4) soit situé de manière opposée au centre de la paroi de projection (18) ;
le déplacement de l'arbre (2) et du levier (10) dans une direction perpendiculaire à la direction de l'axe longitudinal de l'arbre l'un vers l'autre de sorte que la paroi de projection (18) soit reçue dans la rainure (4) ; et
la fixation de l'arbre (2) et du levier (10) en mise en prise positive l'un avec l'autre par application de l'élément de fixation libérable (32), la poussée ainsi de l'arbre vers la paroi de projection pour les verrouiller en mise en prise positive.
